(19) Europäisches Patentamt
European Patent Office
Office européen des brevets

(11) **EP 1 557 714 B1**

(12) **EUROPEAN PATENT SPECIFICATION**

(45) Date of publication and mention
of the grant of the patent:
**06.11.2013  Bulletin 2013/45**

(51) Int Cl.:
***G02F 1/167*** *(2006.01)*

(21) Application number: **05007269.3**

(22) Date of filing: **09.04.1999**

(54) **Full color reflective display with multichromatic sub-pixels**

MEHRFAHRBIGE REFLEKTIERENDE ANZEIGEVORRICHTUNG MIT POLYCHROMATISCHEN SUBPIXELN

AFFICHAGE REFLECHISSANT EN COULEURS AVEC SOUS-PIXELS MULTICHROMATIQUES

(84) Designated Contracting States:
**CH DE FR GB IT LI NL**

(30) Priority: **10.04.1998  US 81362 P**

(43) Date of publication of application:
**27.07.2005  Bulletin 2005/30**

(62) Document number(s) of the earlier application(s) in
accordance with Art. 76 EPC:
**99916582.2 / 1 070 276**

(73) Proprietor: **E Ink Corporation**
**Cambridge, MA 02138-1002 (US)**

(72) Inventors:
• **Drzaic, Paul**
**Morgan Hill**
**CA 95037 (US)**
• **Wilcox, Russell J.**
**Natick**
**MA 01760 (US)**

(74) Representative: **Cole, David John**
**46 Kirkhill Gardens,**
**West Greenlees Estate**
**Cambuslang,**
**Glasgow G72 8EZ (GB)**

(56) References cited:
EP-A- 0 913 804    EP-A2- 0 709 713
WO-A-98/03896    WO-A-99/10768
US-A- 3 792 308    US-A- 3 870 517
US-A- 5 380 362    US-A- 5 717 515

• PATENT ABSTRACTS OF JAPAN vol. 013, no. 316 (P-900), 18 July 1989 (1989-07-18) -& JP 01 086116 A (NIPPON MEKTRON LTD), 30 March 1989 (1989-03-30)
• PATENT ABSTRACTS OF JAPAN vol. 017, no. 204 (P-1524), 21 April 1993 (1993-04-21) -& JP 04 345133 A (TOYOTA MOTOR CORP), 1 December 1992 (1992-12-01)
• COMISKEY B ET AL: "7.4L: LATE-NEWS PAPER: ELECTROPHORETIC INK: A PRINTABLE DISPLAY MATERIAL" 1997 SID INTERNATIONAL SYMPOSIUM DIGEST OF TECHNICAL PAPERS. BOSTON, MAY 13 - 15, 1997, SID INTERNATIONAL SYMPOSIUM DIGEST OF TECHNICAL PAPERS, SANTA ANA, SID, US, vol. VOL. 28, 13 May 1997 (1997-05-13), pages 75-76, XP000722661 ISSN: 0097-966X
• JACOBSON J ET AL: "THE LAST BOOK" IBM SYSTEMS JOURNAL, IBM CORP. ARMONK, NEW YORK, US, vol. 36, no. 3, 1997, pages 457-463, XP000701882 ISSN: 0018-8670

## Description

The present invention relates to an electrophoretic display element.

There are a number of enhanced reflective display media which offer numerous benefits such as enhanced optical appearance, the ability to be constructed in large form factors, capable of being formed using flexible substrates, characterized by easy manufacturability and manufactured at low cost. Such reflective display media include microencapsulated electrophoretic displays, rotating ball displays, suspended particle displays, and composites of liquid crystals with polymers (known by many names including but not limited to polymer dispersed liquid crystals, polymer stabilized liquid crystals, and liquid crystal gels). Electrophoretic display media, generally characterized by the movement of particles through an applied electric field, are highly reflective, can be made bistable, and consume very little power. Further, encapsulated electrophoretic displays also may be printed. These properties allow encapsulated electrophoretic display media to be used in many applications for which traditional electronic displays are not suitable, such as flexible, printed displays.

While bichromatic electrophoretic displays have been demonstrated in a limited range of colors (e.g. black/white or yellow/red), to date there has not been successful commercialization of a full-color electrophoretic display. Indeed, no reflective display technology to date has shown itself capable of satisfactory color. Full-color reflective displays typically are deficient when compared to emissive displays in at least two important areas: brightness and color saturation.

One traditional technique for achieving a bright, full-color display which is known in the art of emissive displays is to create sub-pixels that are red, green and blue. In this system, each pixel has two states: on, or the emission of color; and off. Since light blends from these sub-pixels, the overall pixel can take on a variety of colors and color combinations. In an emissive display, the visual result is the summation of the wavelengths emitted by the sub-pixels at selected intensities, white is seen when red, green and blue are all active in balanced proportion or full intensity. The brightness of the white image is controlled by the intensities of emission of light by the sub-pixels. Black is seen when none are active or, equivalently, when all are emitting at zero intensity. As an additional example, a red visual display appears when the red sub-pixel is active while the green and blue are inactive, and thus only red light is emitted.

It is known that this method can be applied to bichromatic reflective displays, typically using the cyan-magenta-yellow subtractive color system. In this system, the reflective sub-pixels absorb characteristic portions of the optical spectrum, rather than generating characteristic portions of the spectrum as do the pixels in an emissive display. White reflects everything, or equivalently absorbs nothing. A colored reflective material reflects light corresponding in wavelength to the color seen, and absorbs the remainder of the wavelengths in the visible spectrum. To achieve a black display, all three sub-pixels are turned on, and they absorb complementary portions of the spectrum.

However, the colors displayed by a full-color display as described above are sub-optimal. For example, to display red, one pixel displays magenta, one displays yellow, and one displays white. The white sub-pixel reduces the saturation of red in the image and reduces display contrast. The overall effect is a washed out red. This further illustrates why no method to date has been capable of generating a high-contrast, high-brightness full color reflective display with good color saturation.

US-A-3 792 308 describes a color electrophoretic display element comprising a first cell which emits red light and a second cell which emits blue light, the display element presenting a visual display in response to application of an electric field to the cells. The electrophoretic suspension used in the cells can include a first species of yellow particles and second species of blue particles.

US-A-3 870 517 describes a color electrophoretic display including a suspension layer having a white colored suspending medium and at least three differently colored photosensitive electrophoretic materials in the form of finely divided powder suspended in the white colored suspending medium, the three differently colored photosensitive electrophoretic materials consisting of cyan colored material photosensitive to red light, magenta colored material photosensitive to green light, and yellow colored material photosensitive to blue light.

This invention teaches practical ways to achieve brighter, more saturated, reflective full-color displays than previously known, particularly full-color encapsulated, electrophoretic displays.

This invention seeks to provide a brighter, more saturated, reflective full-color display. Some displays of the invention are highly flexible, can be manufactured easily, consume little power, and can, therefore, be incorporated into a variety of applications. In an embodiment the invention, display media can be printed and, therefore the display itself can be made inexpensively.

The present invention provides an electrophoretic display element comprising:

a first capsule including a first species of particles having a first color and a second species of particles having a second color visually different from the first color;

and a second capsule including a third species of particles having a third color and a fourth species of particles having a fourth color visually different from the first, second and third colors,

wherein the element presents a visual display in response to the application of an electrical signal to at least one of the first and second capsules

In the display of the invention, the second capsules is free from the second species of particles and the first and third species of particles are substantially similar in appearance.

An encapsulated electrophoretic display can be constructed so that the optical state of the display is stable for some length of time. When the display has two states which are stable in this manner, the display is said to be bistable. If more than two states of the display are stable, then the display can be said to be multistable. For the purpose of this invention, the terms bistable and multistable, or generally, stable, will be used to indicate a display in which any optical state remains fixed once the addressing voltage is removed. The definition of a stable state depends on the application for the display. A slowly-decaying optical state can be effectively stable if the optical state is substantially unchanged over the required viewing time. For example, in a display which is updated every few minutes, a display image which is stable for hours or days is effectively bistable or multistable, as the case may be, for that application. In this invention, the terms bistable and multistable also indicate a display with an optical state sufficiently long-lived as to be effectively stable for the application in mind. Alternatively, it is possible to construct encapsulated electrophoretic displays in which the image decays quickly once the addressing voltage to the display is removed (i.e., the display is not bistable or multistable). As will be described, in some applications it is advantageous to use an encapsulated electrophoretic display which is not bistable or multistable. Whether or not an encapsulated electrophoretic display is stable, and its degree of stability, can be controlled through appropriate chemical modification of the electrophoretic particles, the suspending fluid, the capsule, and binder materials.

An encapsulated electrophoretic display may take many forms. The display may comprise capsules dispersed in a binder. The capsules may be of any size or shape. The capsules may, for example, be spherical and may have diameters in the millimeter range or the micron range, but is preferably from ten to a few hundred microns. The capsules may be formed by an encapsulation technique, as described below. Particles may be encapsulated in the capsules. The particles may be two or more different types of particles. The particles may be colored, luminescent, light-absorbing or transparent, for example. The particles may include neat pigments, dyed (laked) pigments or pigment/polymer composites, for example. The display may further comprise a suspending fluid in which the particles are dispersed.

The successful construction of an encapsulated electrophoretic display requires the proper interaction of several different types of materials and processes, such as a polymeric binder and, optionally, a capsule membrane. These materials must be chemically compatible with the electrophoretic particles and fluid, as well as with each other. The capsule materials may engage in useful surface interactions with the electrophoretic particles, or may act as a chemical or physical boundary between the fluid and the binder. Various materials and combinations of materials useful in constructing encapsulated electrophoretic displays are described in WO-A-99/10767.

In some cases, the encapsulation step of the process is not necessary, and the electrophoretic fluid may be directly dispersed or emulsified into the binder (or a precursor to the binder materials) and an effective "polymer-dispersed electrophoretic display" constructed. In such displays, voids created in the binder may be referred to as capsules or microcapsules even though no capsule membrane is present. The binder dispersed electrophoretic display may be of the emulsion or phase separation type.

Throughout the specification, reference will be made to printing or printed. As used throughout the specification, printing is intended to include all forms of printing and coating, including: premetered coatings such as patch die coating, slot or extrusion coating, slide or cascade coating, and curtain coating; roll coating such as knife over roll coating, forward and reverse roll coating; gravure coating; dip coating; spray coating; meniscus coating; spin coating; brush coating; air knife coating; silk screen printing processes; electrostatic printing processes; thermal printing processes; and other similar techniques. A "printed element" refers to an element formed using any one of the above techniques.

As noted above, electrophoretic display elements can be encapsulated. Throughout the Specification, reference will be made to "capsules," "pixels," and "sub-pixels." A pixel display element can be formed by one or more capsules or sub-pixels. A sub-pixel may itself comprise one or more capsules or other structures.

A full color, reflective display having superior saturation and brightness is achieved with a novel display element comprising multichromatic sub-elements.

The present invention relates to an electrophoretic display element. The display element comprises a first capsule including a first species of particles having a first optical property and a second species of particles having a second optical property visually different from the first optical property. The display element further comprises a second capsule including a third species of particles having a third optical property and a fourth species of particles having a fourth optical property visually different from the third optical property. The display element presents a visual display in response to the application of an electrical signal to at least one of the first and second capsules. The first optical property and the third optical property are substantially similar in appearance.

The electrophoretic display element can further comprise a fifth species of particles having a fifth optical property visually different from the first and second optical properties in the first capsule. It can also comprise a sixth species of particles having a sixth optical property visually different from the third and fourth optical properties in the second capsule. It can also include a third capsule having a seventh species of particles having a seventh optical property, an eighth species of particles having a eighth optical property, and a ninth species of particles having a ninth optical property.

The electrophoretic display element can include particles such that the first, third and seventh optical properties have a white visual appearance. The electrophoretic display element can include particles such that the second, fourth and eighth optical properties have a black visual appearance. The electrophoretic display element can have at least one of the optical properties be red, green, blue, yellow, cyan, or magenta in visual appearance. The electrophoretic display element can have at least one of the optical properties comprising color, brightness, or reflectivity.

The electrophoretic display element can have capsules which include a suspending fluid. The suspending fluid can be substantially clear, or it can be dyed or otherwise colored.

In another aspect, the present invention relates to a display apparatus comprising at least one display element which includes at least two capsules such as are described above and at least one electrode adjacent to the display element, wherein the apparatus presents a visual display in response to the application of an electrical signal via the electrode to the display element.

The display apparatus can include a plurality of electrodes adjacent the display element. The plurality of electrodes can include at least one which has a size different from others of the plurality of electrodes, and can include at least one which has a color different from others of the plurality of electrodes

The advantages of the invention described above, together with further advantages, may be better understood by referring to the following description taken in conjunction with the accompanying drawings. In the drawings, like reference characters generally refer to the same parts throughout the different views. Also, the drawings are not necessarily to scale, emphasis instead generally being placed upon illustrating the principles of the invention.

FIG. 1A is a diagrammatic side view of an embodiment of a dual particle curtain mode addressing structure addressing a display element to appear white.

FIG. 1B is a diagrammatic side view of an embodiment of a dual particle curtain mode addressing structure addressing a display element to appear red.

FIG. 1C is a diagrammatic side view of an embodiment of a dual particle curtain mode addressing structure addressing a display element to absorb red light.

FIG. 1D is a diagrammatic side view of an embodiment of a dual particle curtain mode addressing structure for a display element having three sub-pixels, in which the display is addressed to appear red.

FIG. 1E is a diagrammatic side view of another embodiment of a dual particle curtain mode addressing structure for a display element.

FIG. IF is a diagrammatic plan view of an embodiment of an interdigitated electrode structure.

FIG. 1G is a diagrammatic side view of another embodiment of a dual particle curtain mode display structure having a dyed fluid and two species of particles, addressed to absorb red.

FIG. 1H is a diagrammatic side view of another embodiment of a dual particle curtain mode display structure having clear fluid and three species of particles, addressed to absorb red.

FIG. 2 is a diagrammatic side view of an embodiment of a color display capsule having red, green, and blue particles of different electrophoretic mobilities.

FIGs. 3A-3B depict the steps taken to address the capsule of FIG. 2 to display red.

FIGs. 4A-4D depict the steps taken to address the capsule of FIG. 2 to display blue.

FIGs. 5A-5C depict the steps taken to address the capsule of FIG. 2 to display green.

FIG. 6 is a cross-sectional view of a rear electrode addressing structure that is formed by printing.

FIG. 7 is a perspective view of an embodiment of a control grid addressing structure.

An electronic ink is an optoelectronically active material that comprises at least two phases: an electrophoretic contrast media phase and a coating/binding phase. The electrophoretic phase comprises more than one species of electrophoretic particles having distinct physical and electrical characteristics dispersed in a clear or dyed medium. The electrophoretic phase is encapsulated, that is, there is a capsule wall phase between the two phases. The coating/binding phase includes, in one embodiment, a polymer matrix that surrounds the electrophoretic phase. In this embodiment, the polymer in the polymeric binder is capable of being dried, crosslinked, or otherwise cured as in traditional inks, and therefore a printing process can be used to deposit the electronic ink onto a substrate.

The ink may comprise sub-pixels capable of displaying different colors. Sub-pixels may be grouped to form pixels. In one particular embodiment, each sub-pixel contains red particles, green particles, and blue particles, respectively. In another particular embodiment, each sub-pixel contains cyan particles, yellow particles, and magenta particles, respectively. In each example, each sub-pixel can additionally include particles which are white and particles which are black. By addressing each sub-pixel to display some fraction of its colored particles, and some portion of the white and black particles, a pixel can be caused to give an appearance corresponding to a selected color at a selected brightness level.

An electronic ink is capable of being printed by several different processes, depending on the mechanical properties of the specific ink employed. For example, the fragility or viscosity of a particular ink may result in a different process selection. A very viscous ink would not be well-suited to deposition by an inkjet printing process, while a fragile ink might not be used in a knife over roll coating process.

The optical quality of an electronic ink is quite distinct from other electronic display materials. The most notable difference is that the electronic ink provides a high degree of both reflectance and contrast because it is pigment based (as are ordinary printing inks). The light scattered from the electronic ink comes from a very thin layer of pigment close to the top of the viewing surface. In this respect it resembles an ordinary, printed image. Also, electronic ink is easily viewed from a wide range of viewing angles in the same manner as a printed page, and such ink approximates a Lambertian contrast curve more closely than any other electronic display material. Since electronic ink can be printed, it can be included on the same surface with any other printed material, including traditional inks. Electronic ink can be made optically stable in all display configurations, that is, the ink can be set to a persistent optical state. Fabrication of a display by printing an electronic ink is particularly useful in low power applications because of this stability.

Electronic ink displays are novel in that they can be addressed by DC voltages and draw very little current. As such, the conductive leads and electrodes used to deliver the voltage to electronic ink displays can be of relatively high resistivity. The ability to use resistive conductors substantially widens the number and type of materials that can be used as conductors in electronic ink displays. In particular, the use of costly vacuum-sputtered indium tin oxide (ITO) conductors, a standard material in liquid crystal devices, is not required. Aside from cost savings, the replacement of ITO with other materials can provide benefits in appearance, processing capabilities (printed conductors), flexibility, and durability. Additionally, the printed electrodes are in contact only with a solid binder, not with a fluid layer (like liquid crystals). This means that some conductive materials, which would otherwise dissolve or be degraded by contact with liquid crystals, can be used in an electronic ink application. These include opaque metallic inks for the rear electrode (e.g., silver and graphite inks), as well as conductive transparent inks for either substrate. These conductive coatings include semiconducting colloids, examples of which are indium tin oxide and antimony-doped tin oxide. Organic conductors (polymeric conductors and molecular organic conductors) also may be used. Polymers include, but are not limited to, polyaniline and derivatives, polythiophene and derivatives, poly3,4-ethylenedioxythiophene (PEDOT) and derivatives, polypyrrole and derivatives, and polyphenylenevinylene (PPV) and derivatives. Organic molecular conductors include, but are not limited to, derivatives of naphthalene, phthalocyanine, and pentacene. Polymer layers can be made thinner and more transparent than with traditional displays because conductivity requirements are not as stringent.

As an example, there are a class of materials called electroconductive powders which are also useful as coatable transparent conductors in electronic ink displays. One example is Zelec ECP electroconductive powders from DuPont Chemical Co. of Wilmington, Delaware.

It is possible to produce any selected color from the superposition of suitable proportions of three properly chosen colors. In one embodiment, the colors red, green, and blue can be combined in various proportions to produce an image which is perceived as a selected color. Emissive or transmissive displays operate according to additive rules, where the perceived color is created by summing the emission wavelengths of a plurality of emitting or transmitting objects. For an emissive or transmissive display which includes three sub-pixels, one of which can produce red light, one green light, and one blue light, respectively, one can generate all colors, as well as white and black. At one extreme, the combination of all three at full intensity is perceived as white, and at the other, the combination of all three at zero intensity is perceived as black. Specific combinations of controlled proportions of these three colors can be used to represent other colors.

In a reflective display; the light which a viewer perceives is the portion of the spectrum which is not absorbed when the light to be reflected falls on the reflector surface. One may thus consider a reflecting system as a subtractive system, that is, that each reflective surface "subtracts" from the light that portion which the reflector absorbs. The color of a reflector represents the wavelengths of light the reflector absorbs. A yellow reflector absorbs substantially blue light. A magenta reflector absorbs substantially green light. A cyan reflector absorbs substantially red light. Thus, in an alternative embodiment employing reflectors, nearly the same results as an emissive system can be obtained by use of the three colors cyan, yellow, and magenta as the primary colors, from which all other colors, including black but not white, can be derived. To obtain white from such a display, one must further introduce a third state per sub-pixel, namely white.

One approach which may be taken to overcome the shortcomings inherent in two state displays is to create a display comprising individual pixels or pixels comprising sub-pixels that can support multiple color states. The use of multiple color states permits more robust color rendition and provides better contrast than is possible with two color states per pixel or per sub-pixel. For example, using a microencapsulated electrophoretic display, a single microcapsule with five kinds of particles could display white, cyan, magenta, yellow, or black all with excellent saturation. By foregoing black and using cyan/magenta/yellow to combine to black, a similar effect can be achieved with a display element capable of four color states.

The invention can also utilize any reflective display element that can create three color states within a single sub-pixel, where sub-pixels are combined to generate a variety of overall pixel colors. Such a display is capable of greatly improved appearance yet relies on only three color states per sub-pixel instead of four or five or more. A sub-pixel having only three color states can have advantages with regard to the operation of the display. Fewer and simpler applied voltage signals are needed to operate each sub-pixel of the display element, A sub-pixel having fewer stable states may be capable of being addressed more quickly than one with more stable states.

Various methods are possible by which three color states could be achieved within a single addressable region, which can be a display element sub-pixel. For example, a microencapsulated electrophoretic display element sub-pixel may contain particles in a clear suspension medium. A simple addressing method is to provide white particles having a positive charge, cyan particles having a negative charge, and red particles having no charge. In this example, white is achieved when the top electrode is negative and the bottom electrodes are both positive. Cyan is achieved when the top electrode is positive and the bottom electrodes are both negative. Red is achieved when the top electrode is set to ground, one bottom electrode is positive and attracts the cyan particles, and the other bottom electrode is negative and attracts the white particles, so that the red particles are uppermost and are seen.

Another example combines top and bottom motion with a sideways or so-called in-plane switching, control grid or shutter-effect method. In one example, red particles have strong positive charge, black particles have lesser positive charge, and the sub-pixel of the display incorporates a white sheet behind a clear bottom electrode. The clear bottom electrode comprises a larger sub-electrode and a smaller sub-electrode. In this example, using a shutter effect, red is achieved when the top electrode has a negative voltage and the bottom electrode, including both subelectrodes, has a positive voltage. Black is achieved when the top electrode has a positive voltage and the bottom electrode, including both subelectrodes, has a negative voltage. White is achieved when the smaller subelectrode of the bottom electrode is switched to a negative voltage but the top electrode and the larger subelectrode of the bottom electrode is switched to a less negative voltage. Thus the red and black particles are attracted to cluster at the smaller sub-electrode, with the slower black particles clustering on top and blocking from sight the red particles, and the bulk of the microcapsule is clear, allowing the white sheet to be visible. The top electrode may be masked so that the clustered particles are not visible. Additionally, the backing sheet could be replaced with a backlight or color filter and backlight. In another embodiment, a brief alternating voltage signal may be used prior to addressing methods described above to mix the particles into a random order.

While the methods described discuss particles, any combination of dyes, liquids droplets and transparent regions that respond to electrophoretic effects could also be used. Particles of various optical effects may be combined in any suitable proportion. For example, certain colors may be over- or under-populated in the electrophoretic suspension to account for the sensitivities of the human eye and to thereby achieve a more pleasing or uniform effect. Similarly, the sizes of the sub-pixels may also be disproportionate to achieve various optical effects.

One embodiment of the invention is to separate each pixel into three sub-pixels, each sub-pixel being capable of displaying three color states, and to choose as the color state combinations a first sub-pixel being capable of displaying white, cyan or red, a second sub-pixel being capable of displaying white, magenta or green, and a third sub-pixel being capable of displaying white, yellow or blue. As has already been explained, for a reflective display, black can be displayed with the three sub-pixels turned to red, green and blue, respectively. This display achieves a more saturated black than is achieved under the two-state system. Alternatively, red is displayed with the sub-pixels turned to red, magenta and yellow, respectively, which offers a more saturated red than is obtained with a two-state system. Other colors may be obtained by suitable choices of the individual states of the sub-pixels.

Another embodiment of the invention is to separate each pixel into three sub-pixels, each sub-pixel being capable of displaying three color states, and to choose as the color state combinations a first sub-pixel being capable of displaying white, cyan or black, a second sub-pixel being capable of displaying white, magenta or black, and a third sub-pixel being capable of displaying white, yellow or black. In this embodiment, black and white are displayed directly with high saturation. For example, to display red, the first (cyan) sub-pixel is set to either white or black to achieve a dimmer or brighter color, respectively, the second sub-pixel is set to magenta, and the last sub-pixel is set to yellow.

Another embodiment of the invention is to separate each pixel into three sub-pixels, each sub-pixel being capable of displaying three color states, and to choose as the color state combinations a first sub-pixel being capable of displaying white, red or black, a second sub-pixel being capable of displaying white, green or black, and a third sub-pixel being capable of displaying white, blue or black. In this embodiment, black and white are displayed directly with high saturation. For example, to display red, the first sub-pixel is set to red, and the second and the third sub-pixels are set to either white or black to achieve a dimmer or brighter color, respectively.

While the embodiments above describe a pixel of three sub-pixels, each sub-pixel having three possible color states, the invention is embodied by any pixel containing two or more sub-pixels, where at least one sub-pixel can achieve three or more colors. In this manner a better effect can be achieved for reflective displays than can be achieved by adopting the simple two-state sub-pixel color change technique that is common to emissive displays.

Additionally, the invention can be extended to four or more color states to permit full color displays without the need for sub-pixels, and illustrates addressing mechanisms that work for three states and which can be extended or combined to achieve a display with four or more states.

Another means of generating color in a microencapsulated display medium is the use of color filters in conjunction with a contrast-generating optical element. One manifestation of this technique is to use a pixel element which switches between white and black. This, in conjunction with the color filter, allows for switching between a light and dark colored state to occur. However, it is known to those skilled in the art that different numbers of color filters (ranging from one to three) can be used in a sub-pixel, depending on how many colors are desired. Also, the microencapsulated particle display can switch between colors other than white and black. In this case, it is advantageous to use a color filter which is opposed (in a color sense) to the color of the pixel. For example, a yellow color filter used with a blue or white electrophoretic display would result in a green or yellow color to that element.

Additionally, there is an electrophoretic device known as a "shutter mode" display, in which particles are switched electrically between a widely-dispersed state on one electrode and a narrow band on the other electrode. Such a device can act as a transmissive light valve or reflective display. Color filters can be used with such a device.

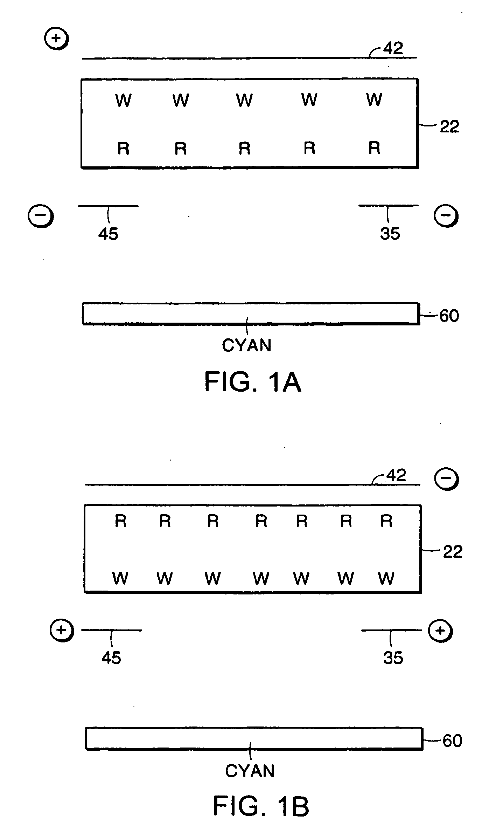

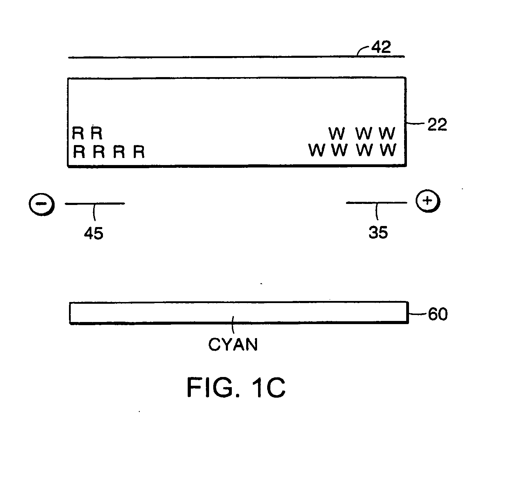

FIGS. 1A-1F show one form of a tri-color capsule which can be used in the displays of the present invention. Clear electrode 42 allows light to pass into capsule 22 and to strike either white particles W, red particles R, or a colored substrate 60. The substrate 60 can be a combination of color filter and non-colored substrate or it can be provided as a unitary colored substrate. Capsule 22 also includes a suspending fluid that can be dye-colored (possibly eliminating the need for a separate color filter 60) or substantially clear. Electrodes 45 and 35 are transparent and may be equally sized or sized in any suitable manner taking into account the relative particles sizes and mobilities of particles W and R. A gap exists between 45 and 35. Assume that particles W are negatively charged and particles R are positively charged. In FIG. 1A, top electrode 42 is set at a positive voltage potential relative to bottom electrodes 35 and 45, moving particles W to the top and particles R to the bottom and thus white is displayed. In FIG. 1B by reversing the polarity of the electrodes, red is displayed. In both FIGS. 1A and 1B the particles obscure substrate 60. In FIG. 1C electrode 45 is at a negative voltage potential relative to electrode 35, while electrode 42 is at a voltage potential between the potentials of 45 and 35, such as zero. Alternatively, electrode 42 switches between the potentials of 45 and 35 so that over time the effective voltage of 42 is again between the potentials of 45 and 35. In this state, the particles R move toward electrode 45 and the particles W move toward electrode 35 and both particles R and W move away from the gap in the center of the capsule 22. This reveals substrate 60, permitting a third color such as cyan to be imaged. In alternate embodiments the color combinations can differ. The specific colors of the filters and particles need not differ. This system, called "dual particle curtain mode," can image three arbitrary colors. In a preferred embodiment the colors are as described wherein one color is white and the other two colors are complements. In this manner, referring again to FIG. 1C, if a small portion of red is visible it absorbs part of the light reflected from the cyan substrate and the net result is black, which may be offset by a small portion of visible white. Thus, the pixel in FIG. 1C may appear to be cyan even if some red and white is visible. As mentioned above, the edges of the pixel may be masked to hide particles R and W when in the mode shown in FIG. 1C.

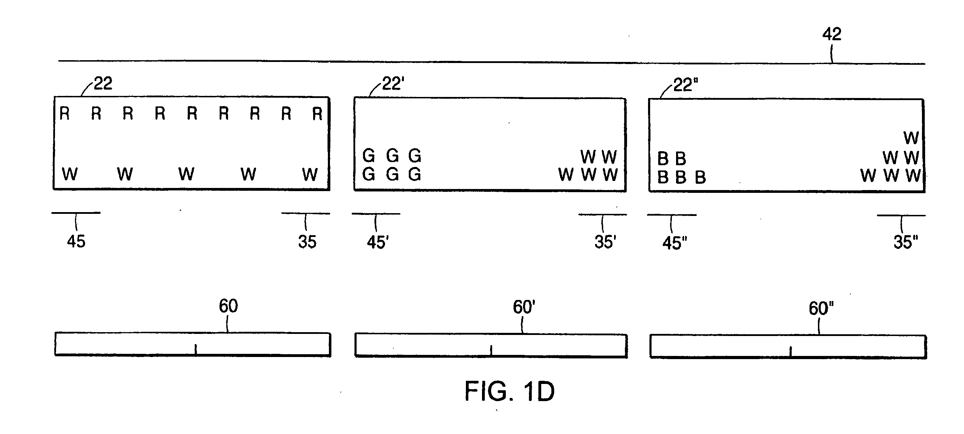

Referring now to FIG. 1D, a full-color pixel is shown comprising three sub-pixels, each operating in the manner taught by FIGS. 1A-1C wherein the colored particles are positively charged, and the white particles are negatively charged. The system may still function with top electrode 42 extended as a common top electrode as shown in FIG. 1D. For example, to achieve the state shown, electrodes 42, 45, 35, 45', 35', 45", 35" may be set to voltage potentials - 30V, 60V, 60V, -60V, +60V, -60V, +60V respectively.

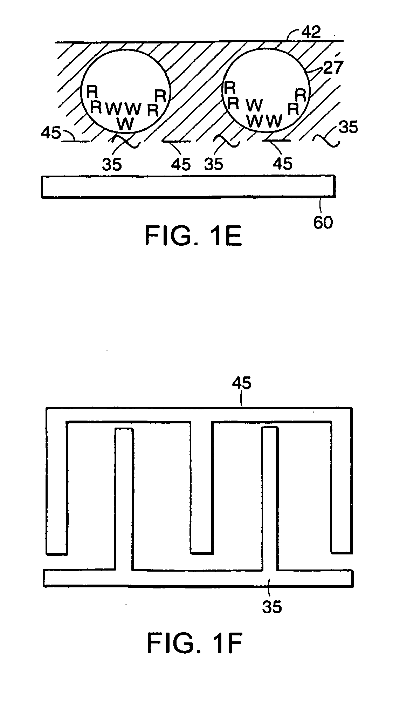

Referring now to FIGS. 1 E-!f, an electrode scheme is shown whereby a cluster of microcapsules may be addressed for an entire sub-pixel in a manner similar to those described above. Clear electrode 42 allows light to pass into microcapsules 27 and to strike either white particles W, red particles R, or colored substrate 60. As above, colored substrate 60 may be a combination of color filter and non-colored substrate 60 or colored substrate 60 may be provided as a unitary colored substrate. Capsules 27 include a suspending fluid that may be dye-colored (possibly eliminating the need for a separate color filter 60) or substantially clear. Electrodes 45 and 35 are transparent and may be equally sized or sized in any suitable manner taking into account the relative particle sizes and mobilities of particles W and R. A gap exists between 45 and 35. Assume that particles W are negatively charged and particles R are positively charged. The system operates in the manner described in FIGS. 1A-1F, although for any given microcapsule 27 there may be multiple gaps. FIG. 1F illustrates an embodiment of a suitable electrode pattern in which 45 and 35 are interdigitated.

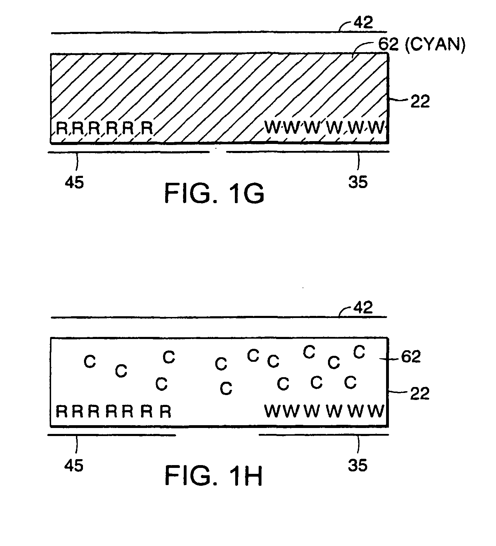

Referring now to 1G-1H, an alternate embodiment is shown. Again clear electrode 42 allows light to pass into capsule 22 and to strike white particles W or red particles R. In the embodiment shown in FIG. 1G, capsule 22 includes a suspending fluid 62 that is dyed cyan. When electrodes 45 and 35 are set at appropriate voltages particles, R and W move down to electrodes 45 and 35 respectively, where they are obscured by light-absorbing suspending fluid 62. Alternatively, as shown in FIG. 1H, suspending fluid 62 is substantially clear and a third species of cyan particles C is included in capsules 22. The cyan particles have a relatively neutral charge. When electrodes 45 and 35 are set at appropriate voltages particles R and W move down to electrodes 45 and 35 respectively, revealing the cyan particles.

FIGS. 1A-1H depict embodiments in which electrode 30, 40 are statically attached to the display media. In certain embodiments, the particles 50 exhibit bistability, that is, they are substantially motionless in the absence of a electric field.

While various of the substrates described above are reflective, an analogous technique may be employed wherein the substrates emit light, with the particles again acting in a "shutter mode" to reveal or obscure light. A preferred substrate for this use is an electroluminiscent (EL) backlight. Such a backlight can be reflective when inactive, often with a whitish-green color, yet emit lights in various wavelengths when active. By using whitish EL substrates in place of static white reflective substrates, it is possible to construct a full-color reflective display that can also switch its mode of operation to display a range of colors in an emissive state, permitting operation in low ambient light conditions.

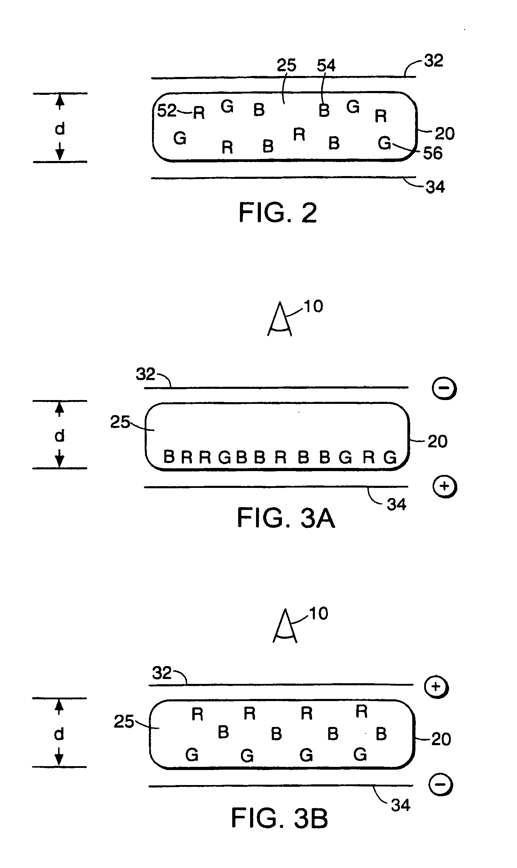

FIG. 2 illustrates a capsule 20 which may be used in the displays of the present invention. The capsule 20 of size d contains multiple species of particles in a clear, dispersing fluid 25. Each species of particles has different optical properties and possess different electrophoretic mobilities ($\mu$) from the other species. In FIG. 2, the capsule 20 contains red particles 52, blue particles 54, and green particles 56, and

$$\left|\mu_R\right| > \left|\mu_B\right| > \left|\mu_G\right|$$

That is, the magnitude of the electrophoretic mobility of the red particles 52, on average, exceeds the electrophoretic mobility of the blue particles 54, on average, and the electrophoretic mobility of the blue particles 54, on average, exceeds the average electrophoretic mobility of the green particles 56. As an example, there may be a species of red particle with a zeta potential of 100 millivolts (mV), a blue particle with a zeta potential of 60 mV, and a green particle with a zeta potential of 20 mV. The capsule 20 is placed between two electrodes 32, 42 that apply an electric field to the capsule. By addressing the capsule 20 with positive and negative voltage fields of varying time durations, it is possible to move any of the various particle species to the top of the capsule to present a certain color.

FIGs. 3A-3B depict the steps to be taken to address the display shown in FIG. 2 to display a red color to a viewpoint 10. Referring to FIG. 3A, all the particles 52, 54, 56 are attracted to one side of the capsule 20 by applying an electric field in one direction. The electric field should be applied to the capsule 20 long enough to attract even the more slowly moving green particles 56 to the electrode 34. Referring to FIG. 3B, the electric field is reversed just long enough to allow the red particles 52 to migrate towards the electrode 32. The blue particles 54 and green particles 56 will also move in the reversed electric field, but they will not move as fast as the red particles 52 and thus will be obscured by the red particles 52. The amount of time for which the applied electric field must be reversed can be determined from the relative electrophoretic mobilities of the particles, the strength of the applied electric field, and the size of the capsule.

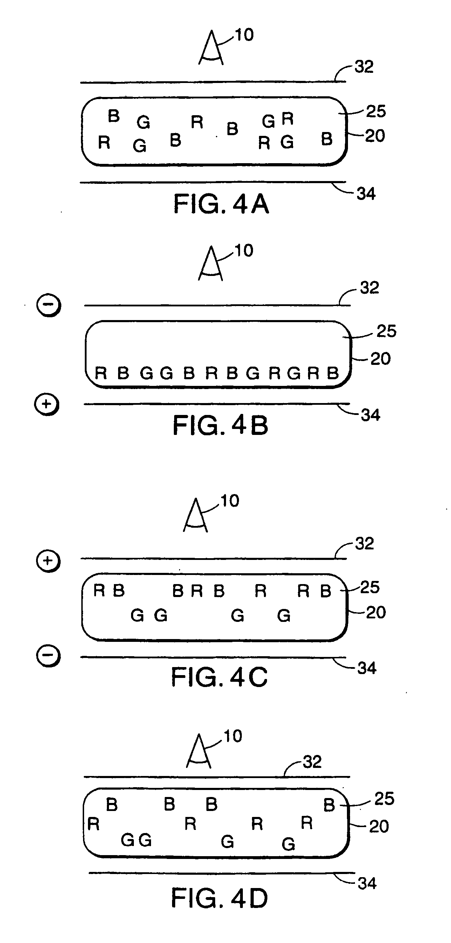

FIGs. 4A-4D depict addressing the display element to a blue state. As shown in FIG. 4A, the particles 52, 54, 56 are initially randomly dispersed in the capsule 20. All the particles 52, 54, 56 are attracted to one side of the capsule 20 by applying an electric field in one direction (shown in FIG. 4B). Referring to FIG. 4C, the electric field is reversed just long enough to allow the red particles 52 and blue particles 54 to migrate towards the electrode 32. The amount of time for which the applied electric field must be reversed can be determined from the relative electrophoretic mobilities of the particles, the strength of the applied electric field, and the size of the capsule. Referring to FIG. 4D, the electric field is then reversed a second time and the red particles 52, moving faster than the blue particles 54, leave the blue particles 54 exposed to the viewpoint 10. The amount of time for which the applied electric field must be reversed can be determined from the relative electrophoretic mobilities of the particles, the strength of the applied electric field, and the size of the capsule.

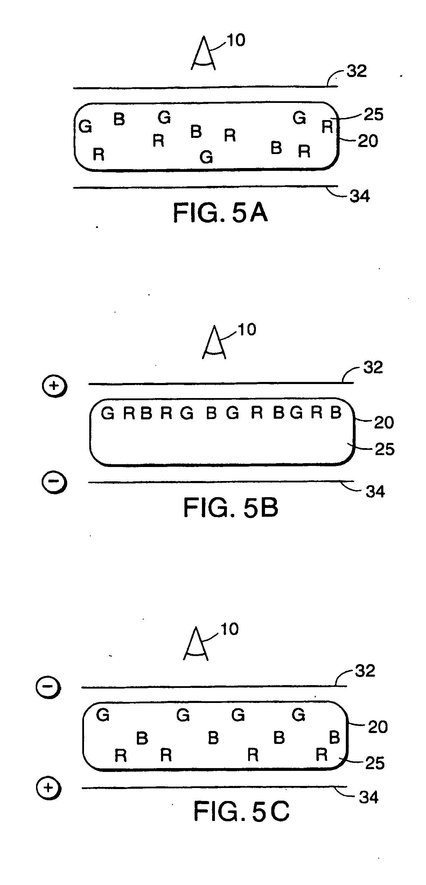

FIGS. 5A-5C depict the steps to be taken to present a green display to the viewpoint 10. As shown in FIG. 5A, the particles 52, 54, 56 are initially distributed randomly in the capsule 20. All the particles 52, 54, 56 are attracted to the side of the capsule 20 proximal the viewpoint 10 by applying an electric field in one direction. The electric field should be applied to the capsule 20 long enough to attract even the more slowly moving green particles 56 to the electrode 32. As shown in FIG. 5C, the electric field is reversed just long enough to allow the red particles 52 and the blue particles 54 to migrate towards the electrode 54, leaving the slowly-moving green particles 56 displayed to the viewpoint. The amount of time for which the applied electric field must be reversed can be determined from the relative electrophoretic mobilities of the particles, the strength of the applied electric field, and the size of the capsule.

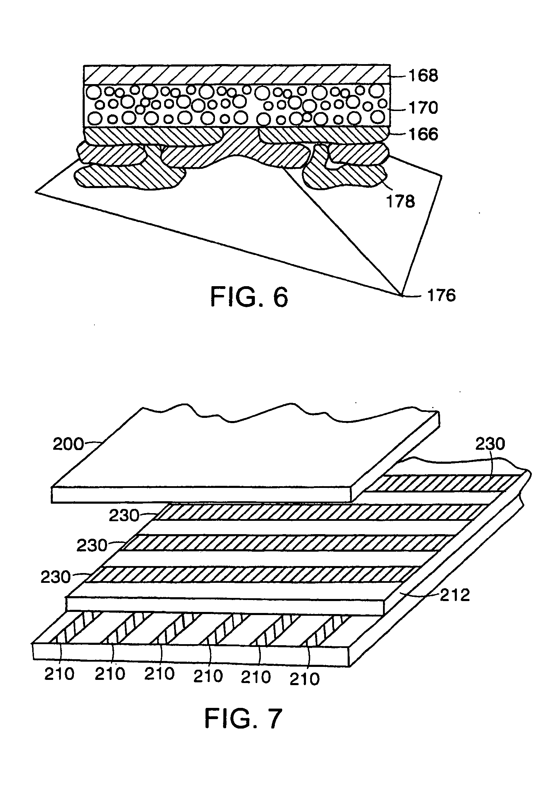

In other embodiments, the capsule contains multiple species of particles and a dyed dispersing fluid that acts as one of the colors. In still other embodiments, more than three species of particles may be provided having additional colors. In one of these embodiments, the capsule contains white particles which have a strong positive charge, cyan particles which have a weakly positive charge, and red particles having a negative charge. Since the electrophoretic mobilities of these types of particles will be proportional to charge and of a direction related to the sign or polarity of the charge, these three types of particles will have different mobilities in the same voltage field. In this example, white is achieved when the top electrode is negative and the bottom electrode is positive. Red is achieved when the top electrode is positive and the bottom electrode is negative. Cyan is achieved by first setting the sub-pixel to white and then briefly reversing the voltage field so that the higher mobility white particles migrate past the cyan particles and the lower mobility, or slower, cyan particles remain topmost and visible. Although FIGS. 6-8C depict two electrodes associated with a single capsule, the electrodes may address multiple capsules or less than a full capsule.

The addressing structures described in FIGS. 1-5 typically comprise a top electrode controlled by display driver circuitry. It may be seen that if the top electrode is absent, the display may be imaged by an externally applied voltage source, such as a passing stylus or electrostatic print head. The means that techniques applied above to generate a full-color electrophoretic display could also be applied for a full-color electrophoretic media.

In FIG. 6, the rear electrode structure can be made entirely of printed layers. A conductive layer 166 can be printed onto the back of a display comprised of a clear, front electrode 168 and a printable display material 170. A clear electrode may be fabricated from indium tin oxide or conductive polymers such as polyanilines and polythiophenes. A dielectric coating 176 can be printed leaving areas for vias. Then, the back layer of conductive ink 178 can be printed. If necessary, an additional layer of conductive ink can be used before the final ink structure is printed to fill in the holes.

This technique for printing displays can be used to build the rear electrode structure on a display or to construct two separate layers that are laminated together to form the display. For example an electronically active ink may be printed on an indium tin oxide electrode. Separately, a rear electrode structure as described above can be printed on a suitable substrate, such as plastic, polymer films, or glass. The electrode structure and the display element can be laminated to form a display.

Referring now to FIG. 7, a threshold may be introduced into an electrophoretic display cell by the introduction of a third electrode. One side of the cell is a continuous, transparent electrode 200 (anode). On the other side of the cell, the transparent electrode is patterned into a set of isolated column electrode strips 210. An insulator 212 covers the column electrodes 210, and an electrode layer on top of the insulator is divided into a set of isolated row electrode strips 230, which are oriented orthogonal to the column electrodes 210. The row electrodes 230 are patterned into a dense array of holes, or a grid, beneath which the exposed insulator 212 has been removed, forming a multiplicity of physical and potential wells.

A positively charged particle 50 is loaded into the potential wells by applying a positive potential (e.g. 30V) to all the column electrodes 210 while keeping the row electrodes 230 at a less positive potential (e.g. 15V) and the anode 200 at zero volts. The particle 50 may be a conformable capsule that situates itself into the physical wells of the control grid. The control grid itself may have a rectangular cross-section, or the grid structure may be triangular in profile. It can also be a different shape which encourages the microcapsules to situate in the grid, for example, hemispherical.

The anode 200 is then reset to a positive potential (e.g. 50V). The particle will remain in the potential wells due to the potential difference in the potential wells: this is called the Hold condition. To address a display element the potential on the column electrode associated with that element is reduced, e.g. by a factor of two, and the potential on the row electrode associated with that element is made equal to or greater than the potential on the column electrode. The particles in this element will then be transported by the electric field due to the positive voltage on the anode 200. The potential difference between row and column electrodes for the remaining display elements is now less than half of that in the normal Hold condition. The geometry of the potential well structure and voltage levels are chosen such that this also constitutes a Hold condition, i.e., no particles will leave these other display elements and hence there will be no half-select problems. This addressing method can select and write any desired element in a matrix without affecting the pigment in any other display element. A control electrode device can be operated such that the anode electrode side of the cell is viewed.

The control grid may be manufactured through any of the processes known in the art, or by several novel processes described herein. That is, according to traditional practices, the control grid may be constructed with one or more steps of photolithography and subsequent etching, or the control grid may be fabricated with a mask and a "sandblasting" technique.

In another embodiment, the control grid is fabricated by an embossing technique on a plastic substrate. The grid electrodes may be deposited by vacuum deposition or sputtering, either before or after the embossing step. In another embodiment, the electrodes are printed onto the grid structure after it is formed, the electrodes consisting of some kind of printable conductive material which need not be clear (e.g. a metal or carbon-doped polymer, an intrinsically conducting polymer, etc.).

In a preferred embodiment, the control grid is fabricated with a series of printing steps. The grid structure is built up in a series of one or more printed layers after the cathode has been deposited, and the grid electrode is printed onto the grid structure. There may be additional insulator on top of the grid electrode, and there may be multiple grid electrodes separated by insulator in the grid structure. The grid electrode may not occupy the entire width of the grid structure, and may only occupy a central region of the structure, in order to stay within reproducible tolerances. In another embodiment, the control grid is fabricated by photoetching away a glass, such as a photostructural glass.

In an encapsulated electrophoretic image display, an electrophoretic suspension, such as the ones described previously, is placed inside discrete compartments that are dispersed in a polymer matrix. This resulting material is highly susceptible to an electric field across the thickness of the film. Such a field is normally applied using electrodes attached to either side of the material. However, some display media may be addressed by writing electrostatic charge onto one side of the display material. The other side normally has a clear or opaque electrode. For example, a sheet of encapsulated electrophoretic display media can be addressed with a head providing DC voltages.

In another embodiment, the encapsulated electrophoretic suspension can be printed onto an area of a conductive material such as a printed silver or graphite ink, aluminized mylar, or any other conductive surface. This surface which constitutes one electrode of the display can be set at ground or high voltage. An electrostatic head consisting of many electrodes can be passed over the capsules to addressing them. Alternatively, a stylus can be used to address the encapsulated electrophoretic suspension.

In another embodiment, an electrostatic write head is passed over the surface of the material. This allows very high resolution addressing. Since encapsulated electrophoretic material can be placed on plastic, it is flexible. This allows the material to be passed through normal paper handling equipment. Such a system works much like a photocopier, but with no consumables. The sheet of display material passes through the machine and an electrostatic or electrophotographic head addresses the sheet of material.

In another embodiment, electrical charge is built up on the surface of the encapsulated display material or on a dielectric sheet through frictional or triboelectric charging. The charge can built up using an electrode that is later removed. In another embodiment, charge is built up on the surface of the encapsulated display by using a sheet of piezoelectric material.

Microencapsulated displays offer a useful means of creating electronic displays, many of which can be coated or printed. There are many versions of microencapsulated displays, including microencapsulated electrophoretic displays. These displays can be made to be highly reflective, bistable, and low power.

To obtain high resolution displays, it is useful to use some external addressing means with the microencapsulated material. This invention describes useful combinations of addressing means with microencapsulated electrophoretic materials in order to obtain high resolution displays.

One method of addressing liquid crystal displays is the use of silicon-based thin film transistors to form an addressing backplane for the liquid crystal. For liquid crystal displays, these thin film transistors are typically deposited on glass, and are typically made from amorphous silicon or polysilicon. Other electronic circuits (such as drive electronics or logic) are sometimes integrated into the periphery of the display. An emerging field is the deposition of amorphous or polysilicon devices onto flexible substrates such as metal foils or plastic films.

The addressing electronic backplane could incorporate diodes as the nonlinear element, rather than transistors. Diode-based active matrix arrays have been demonstrated as being compatible with liquid crystal displays to form high resolution devices.

There are also examples of crystalline silicon transistors being used on glass substrates. Crystalline silicon possesses very high mobilities, and thus can be used to make high performance devices. Presently, the most straightforward way of constructing crystalline silicon devices is on a silicon wafer. For use in many types of liquid crystal displays, the crystalline silicon circuit is constructed on a silicon wafer, and then transferred to a glass substrate by a "liftoff' process. Alternatively, the silicon transistors can be formed on a silicon wafer, removed via a liftoff process, and then deposited on a flexible substrate such as plastic, metal foil, or paper. As another embodiment, the silicon could be formed on a different substrate that is able to tolerate high temperatures (such as glass or metal foils), lifted off, and transferred to a flexible substrate. As yet another embodiment, the silicon transistors are formed on a silicon wafer, which is then used in whole or in part as one of the substrates for the display.

The use of silicon-based circuits with liquid crystals is the basis of a large industry. Nevertheless, these display possess serious drawbacks. Liquid crystal displays are inefficient with light, so that most liquid crystal displays require some sort of backlighting. Reflective liquid crystal displays can be constructed, but are typically very dim, due to the presence of polarizers. Most liquid crystal devices require precise spacing of the cell gap, so that they are not very compatible with flexible substrates. Most liquid crystal displays require a "rubbing" process to align the liquid crystals, which is both difficult to control and has the potential for damaging the TFT array.

The combination of these thin film transistors with microencapsulated electrophoretic displays should be even more advantageous than with liquid crystal displays. Thin film transistor arrays similar to those used with liquid crystals could also be used with the microencapsulated display medium. As noted above, liquid crystal arrays typically requires a "rubbing" process to align the liquid crystals, which can cause either mechanical or static electrical damage to the transistor array. No such rubbing is needed for microencapsulated displays, improving yields and simplifying the construction process.

Microencapsulated electrophoretic displays can be highly reflective. This provides an advantage in high-resolution displays, as a backlight is not required for good visibility. Also, a high-resolution display can be built on opaque substrates, which opens up a range of new materials for the deposition of thin film transistor arrays.

Moreover, the encapsulated electrophoretic display is highly compatible with flexible substrates. This enables high-resolution TFT displays in which the transistors are deposited on flexible substrates like flexible glass, plastics, or metal foils. The flexible substrate used with any type of thin film transistor or other nonlinear element need not be a single sheet of glass, plastic, metal foil, though. Instead, it could be constructed of paper. Alternatively, it could be constructed of a woven material. Alternatively, it could be a composite or layered combination of these materials.

As in liquid crystal displays, external logic or drive circuitry can be built on the same substrate as the thin film transistor switches.

In another embodiment, the addressing electronic backplane could incorporate diodes as the nonlinear element, rather than transistors.

In another embodiment, it is possible to form transistors on a silicon wafer, dice the transistors, and place them in a large area array to form a large, TFT-addressed display medium. One example of this concept is to form mechanical impressions in the receiving substrate, and then cover the substrate with a slurry or other form of the transistors. With agitation, the transistors will fall into the impressions, where they can be bonded and incorporated into the device circuitry. The receiving substrate could be glass, plastic, or other nonconductive material. In this way, the economy of creating transistors using standard processing methods can be used to create large-area displays without the need for large area silicon processing equipment.

**Claims**

1. An electrophoretic display element comprising:

   a first capsule (22) including a first species of particles (W) having a first color and a second species of particles (R) having a second color visually different from the first color; and a second capsule (22') including a third species of particles (W) having a third color and a fourth species of particles (G) having a fourth color visually different from the first, second and third colors, wherein the element presents a visual display in response to the application of an electrical signal to at least one of the first (22) and second (22') capsules,
   the display being **characterized in that** the first and third species of particles are substantially similar in color, and **in that** at least three electrodes are disposed adjacent each capsule.

2. An electrophoretic display element according to claim 1 comprising:

   in the first capsule, a fifth species of particles having a fifth color visually different from the first and second colors; and in the second capsule, a sixth species of particles having a sixth color visually different from the third and fourth colors; the display also being **characterized by** a third capsule including a seventh species of particles having a seventh color, an eighth species of particles having a eighth color, and a ninth species of particles having a ninth color.

3. An electrophoretic display element according to claim 1 wherein the first and third species have a white color.

4. An electrophoretic display element according to claim 2 wherein the first, third and seventh species have a white color, the second species of particles has a red color, the fifth species of particles has a cyan color, the fourth species of particles has a green color, the sixth species of particles has a magenta color, the eighth species of particles has a blue color and the ninth species of particles has a yellow color.

**Patentansprüche**

1. Elektrophoretisches Anzeigeelement, das Folgendes umfasst:

   eine erste Kapsel (22), die eine erste Spezies von Teilchen (W) enthält, die eine erste Farbe aufweisen, und eine zweite Spezies von Teilchen (R) enthält, die eine zweite Farbe aufweise, die sich visuell von der ersten Farbe unterscheidet; und eine zweite Kapsel (22'), die eine dritte Spezies von Teilchen (W) enthält, die eine dritte Farbe aufweisen, und eine vierte Spezies von Teilchen (G) enthält, die eine vierte Farbe aufweisen, die sich visuell von der ersten, zweiten und dritten Farbe unterscheidet, wobei das Element eine visuelle Anzeige in Reaktion auf das Anlegen eines elektrischen Signals an die erste (22) und/oder die zweite (22') Kapsel präsentiert, wobei die Anzeige **dadurch gekennzeichnet ist, dass** die erste und die dritte Spezies von Teilchen eine im Wesentlichen ähnliche Farbe aufweisen, und dass mindestens drei Elektroden neben jeder Kapsel angeordnet sind.

**2.** Elektrophoretisches Anzeigeelement nach Anspruch 1, das Folgendes umfasst:

in der ersten Kapsel, eine fünfte Spezies von Teilchen, die eine fünfte Farbe aufweisen, die sich visuell von der ersten und der zweiten Farbe unterscheidet; und
in der zweiten Kapsel, eine sechste Spezies von Teilchen, die eine sechste Farbe aufweisen, die sich visuell von der dritten und der vierten Farbe unterscheidet;
wobei die Anzeige des weiteren durch eine dritte Kapsel gekennzeichnet ist, die eine siebente Spezies von Teilchen enthält, die eine siebente Farbe aufweisen, ein achte Spezies von Teilchen enthält, die eine achte Farbe aufweisen, und eine neunte Spezies von Teilchen enthält, die eine neunte Farbe aufweisen.

**3.** Elektropharetisches Anzeigeelement nach Anspruch 1, wobei die erste und die dritte Spezies eine weiße Farbe haben.

**4.** Elektrophoretisches Anzeigeelement nach Anspruch 2, wobei die erste, die dritte und die siebente Spezies eine weiße Farbe haben, die zweite Spezies von Teilchen eine rote Farbe hat, die fünfte Spezies von Teilchen eine Cyan-Farbe hat, die vierte Spezies von Teilchen eine grüne Farbe hat, die sechste Spezies von Teilchen eine Magenta-Farbe hat, die achte Spezies von Teilchen eine blaue Farbe hat und die neunte Spezies von Teilchen eine gelbe Farbe hat.

**Revendications**

**1.** Élément d'affichage électrophorétique comprenant :

une première capsule (22) comportant une première espèce de particules (W) ayant une première couleur et une deuxième espèce de particules (R) ayant une deuxième couleur visuellement différente de la première couleur ; et
une deuxième capsule (22') comportant une troisième espèce de particules (W) ayant une troisième couleur et une quatrième espèce de particules (G) ayant une quatrième couleur visuellement différente des première, deuxième et troisième couleurs,
l'élément présentant un affichage visuel en réponse à l'application d'un signal électrique à l'une au moins des première (22) et deuxième (22') capsules,
l'affichage étant **caractérisé en ce que** la première et la troisième espèce de particules sont sensiblement similaires en couleur, et **en ce qu'**au moins trois électrodes sont disposées au voisinage de chaque capsule.

**2.** Élément d'affichage électrophorétique selon la revendication 1 comprenant :

dans la première capsule, une cinquième espèce de particules ayant une cinquième couleur visuellement différente des première et deuxième couleurs ; et
dans la deuxième capsule, une sixième espèce de particules ayant une sixième couleur visuellement différente des troisième et quatrième couleurs ;
l'affichage étant également **caractérisé par** une troisième capsule comportant une septième espèce de particules ayant une septième couleur, une huitième espèce de particules ayant une huitième couleur, et une neuvième espèce de particulces ayant une neuvième couleur.

**3.** Élément d'affichage électrophorétique selon la revendication 1 dans lequel la première et la troisième espèce ont une couleur blanche.

**4.** Élément d'affichage électrophorétique selon la revendication 2 dans lequel la première, la troisième et la septième espèce ont une couleur blanche, la deuxième espèce de particules a une couleur rouge, la cinquième espèce de particules a une couleur cyan, la quatrième espèce de particules a une couleur verte, la sixième espèce de particules a une couleur magenta, la huitième espèce de particules a une couleur bleue et la neuvième espèce de particules a une couleur jaune.

⊕

$\overbrace{\qquad\qquad\qquad\qquad\qquad\qquad\qquad\qquad}^{42}$

| W | W | W | W | W |
|---|---|---|---|---|
| R | R | R | R | R |

22

⊖

45

35

⊖

CYAN — 60

## FIG. 1A

$\overbrace{\qquad\qquad\qquad\qquad\qquad\qquad\qquad\qquad}^{42}$  ⊖

| R | R | R | R | R | R | R |
|---|---|---|---|---|---|---|
| W | W | W | W | W | W | W |

22

⊕

45

⊕

35

CYAN — 60

## FIG. 1B

42

R R            W W W — 22
R R R R       W W W W

⊖                          ⊕

45                    35

— 60

CYAN

## FIG. 1C

FIG. 1D

FIG. 1E

FIG. 1F

FIG. 1G

FIG. 1H

d

52—R  G  B        B  G  R  — 25  54        32
                                            20
G    R  B  R  B  G          — 56
                                            34

**FIG. 2**

A—10

32
d        25                              20
         B R R G B B R B B G R G
                                          34

**FIG. 3A**

⊖
⊕

A—10

32                                        ⊕
d        25      R    R    R    R         20
                   B    B    B    B
                 G    G    G    G
                                          34

**FIG. 3B**

⊖

FIG. 4A

FIG. 4B

FIG. 4C

FIG. 4D

FIG. 5A

FIG. 5B

FIG. 5C

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3792308 A
- US 3870517 A

- WO 9910767 A